# EUROPÄISCHE PATENTANMELDUNG

(11) **EP 4 802 869 A1**
(43) Veröffentlichungstag der Anmeldung: **09.09.2026**
(21) Anmeldenummer: 26159331.3
(22) Anmeldetag: 18.02.2026
(51) Int. Cl.: A01B 3/42

(54) **DREHPFLUG**

(30) Priorität: 06.03.2025 DE 102025108553
(71) Anmelder: Amazonen-Werke H. Dreyer SE & Co. KG, 49205 Hasbergen (DE)
(72) Erfinder: Speri, Reiner Michael, 49205 Hasbergen (DE); Giehoff, Stefan, 49205 Hasbergen-Gaste (DE); Rehnen, Pascal, 49205 Hasbergen-Gaste (DE); Bergmann, Jan, 49205 Hasbergen-Gaste (DE)

(57) **Zusammenfassung**

Die Erfindung betrifft einen Drehpflug (10) zum Bearbeiten des Bodens einer landwirtschaftlichen Nutzfläche, mit einer drehbaren Scharanordnung (12) mit mehreren Pflugscharen, einer mit der Scharanordnung (12) verbundenen Wendekonsole (16) zum Drehen der Scharanordnung (12) und zumindest einem Anschlagskörper (18a, 18b), welcher einen Konsolenanschlag (20a) für die Wendekonsole (16) aufweist, wobei der Konsolenanschlag (20a) die Drehung der Scharanordnung (12) in zumindest einer Drehrichtung (DR1, DR2) begrenzt, wobei die Position des Anschlagskörpers (18a, 18b) über ein sich durch eine Aufnahmeausnehmung (34) des Anschlagskörpers (18a, 18b) erstreckendes Einstellglied (22) veränderbar ist und wobei das Einstellglied (22) eine in Richtung des Anschlagskörpers (18a, 18b) weisende Abstützfläche (40) aufweist und der Anschlagskörper (18a, 18b) eine in Richtung der Abstützfläche (40) des Einstellglieds (22) weisende Aufstandsfläche (42) aufweist.

## Beschreibung

Die Erfindung betrifft einen Drehpflug nach dem Oberbegriff des Patentanspruchs 1.

An einem Drehpflug kann der Neigungswinkel der Scharanordnung zum Traktor und somit zum Boden der zu bearbeitenden Fläche eingestellt werden. Im Regelfall soll die Scharanordnung im rechten Winkel zum unbearbeiteten Boden geführt werden. Damit die Scharanordnung im rechten Winkel zum unbearbeiteten Boden geführt wird, ist üblicherweise eine Einstellung des Neigungswinkels der Scharanordnung erforderlich.

Bei Drehpflügen ist die Neigungsverstellung meist über Konsolenanschläge für eine drehbare Wendekonsole möglich. Die Konsolenanschläge lassen sich über ein Einstellglied in der Höhe verstellen, sodass die Anschlagsausrichtungen der Wendekonsole und somit die Neigung der Scharanordnung in den Arbeitspositionen einstellbar sind.

In diesem Zusammenhang sind beispielsweise aus der Druckschrift DE 2106450 A1 mechanische Anschläge für die Endlagen einer Wendekonsole bekannt.

In der Praxis kann es bei der Neigungsverstellung zu einer Beschädigung oder einem Bruch an dem verwendeten Einstellglied kommen, beispielsweise da das Einstellglied nicht nur die beabsichtigte reine Zugbeanspruchung erfährt, sondern aufgrund einer außermittigen Krafteinleitung auch eine Biegebelastung erfährt. Aufgrund einer Überlagerung von Zug- und Biegebelastung kann es zum Schadensfall kommen.

Die der Erfindung zugrunde liegende Aufgabe besteht also darin, eine überlastungsbedingte Beschädigung oder einen überlastungsbedingten Bruch des Einstellglieds zu verhindern.

Die Aufgabe wird gelöst durch einen Drehpflug zum Bearbeiten des Bodens einer landwirtschaftlichen Nutzfläche, wobei der Drehpflug eine drehbare Scharanordnung mit mehreren Pflugscharen und eine mit der Scharanordnung verbundene Wendekonsole zum Drehen der Scharanordnung aufweist. Ferner umfasst der erfindungsgemäße Drehpflug zumindest einen Anschlagskörper, welcher einen Konsolenanschlag für die Wendekonsole aufweist, wobei der Konsolenanschlag die Drehung der Scharanordnung in zumindest einer Drehrichtung begrenzt. Die Position des Anschlagskörpers ist über ein sich durch eine Aufnahmeausnehmung des Anschlagskörpers erstreckendes Einstellglied veränderbar, wobei das Einstellglied eine in Richtung des Anschlagskörpers weisende Abstützfläche aufweist. Der Anschlagskörper weist eine in Richtung der Abstützfläche des Einstellglieds weisende Aufstandsfläche auf, wobei sich die Abstützfläche des Einstellglieds und die Aufstandsfläche des Anschlagskörpers in einem Überdeckungsbereich in Deckung befinden.

Erfindungsgemäß berühren sich die Abstützfläche des Einstellglieds und die Aufstandsfläche des Anschlagskörpers nur in einem Teilbereich des Überdeckungsbereichs.

Dadurch, dass sich die Abstützfläche des Einstellglieds und die Aufstandsfläche des Anschlagskörpers nur in einem Teilbereich des Überdeckungsbereichs berühren, wird die Druckkraft, die durch die Wendekonsole auf den Anschlagskörper ausgeübt wird, zumindest hauptsächlich, vorzugsweise ausschließlich als Zugkraft in das Einstellglied eingebracht. Die Betriebsfestigkeit des Einstellglieds wird dadurch deutlich erhöht.

Die Scharanordnung des Drehpflugs kann durch eine Drehung um eine sich in Fahrtrichtung erstreckende Drehachse in eine erste Arbeitsstellung und in eine zweite Arbeitsstellung gedreht werden. In der ersten Arbeitsstellung befindet sich die Wendekonsole in Anschlag mit einem ersten Anschlagskörper und in einer zweiten Arbeitsstellung befindet sich die Wendekonsole in Anschlag mit einem zweiten Anschlagskörper. In der ersten Arbeitsstellung ist eine erste Gruppe von Pflugscharen mit dem Boden in Eingriff bringbar, wobei in der zweiten Arbeitsstellung eine zweite Gruppe von Pflugscharen mit dem Boden in Eingriff bringbar ist. Der Anschlagskörper kann einteilig oder mehrteilig ausgebildet sein.

In einer bevorzugten Ausführungsform des erfindungsgemäßen Drehpflugs schneidet der Teilbereich des Überdeckungsbereichs, in welchem sich die Abstützfläche des Einstellglieds und die Aufstandsfläche des Anschlagskörpers berühren, eine Symmetrieebene des Einstellglieds. Der Teilbereich des Überdeckungsbereichs, in welchem sich die Abstützfläche des Einstellglieds und die Aufstandsfläche des Anschlagskörpers berühren, beträgt vorzugsweise weniger als 20 % der Fläche des Überdeckungsbereichs, vorzugsweise weniger als 10 % der Fläche des Überdeckungsbereichs.

In einer weiteren bevorzugten Ausführungsform des erfindungsgemäßen Drehpflugs ist der Teilbereich des Überdeckungsbereichs, in welchem sich die Abstützfläche des Einstellglieds und die Aufstandsfläche des Anschlagskörpers berühren, nicht-umlaufend ausgebildet. Alternativ oder zusätzlich weist der Teilbereich des Überdeckungsbereichs, in welchem sich die Abstützfläche des Einstellglieds und die Aufstandsfläche des Anschlagskörpers berühren, eine Linienform oder eine Punktform auf. Die Aufstandsfläche des Anschlagskörpers kann jenseits des Teilbereichs des Überdeckungsbereichs, in welchem sich die Abstützfläche des Einstellglieds und die Aufstandsfläche des Anschlagskörpers berühren, abfallende Flächenbereiche aufweisen, sodass sich beispielsweise bei einem linienförmigen Kontaktbereich entlang der Kontaktlinie eine Kippachse ergibt, um welche der Anschlagskörper relativ zum Einstellglied verkippen kann.

In einer anderen bevorzugten Ausführungsform des erfindungsgemäßen Drehpflugs umfasst der Teilbereich des Überdeckungsbereichs, in welchem sich die Abstützfläche des Einstellglieds und die Aufstandsfläche des Anschlagskörpers berühren, zwei voneinander beabstandete Berührungszonen. Die voneinander beabstandeten Berührungszonen befinden sich vorzugsweise auf gegenüberliegenden Seiten der Aufnahmeausnehmung. Die zwei voneinander beabstandeten Berührungszonen befinden sich vorzugsweise auf einer Berührungslinie. Die Berührungslinie entspricht vorzugsweise einer Symmetrielinie des Einstellglieds.

Der erfindungsgemäße Drehpflug wird ferner dadurch vorteilhaft weitergebildet, dass die Aufstandsfläche des Anschlagskörpers im Überdeckungsbereich nicht-plan ist, und/oder die Aufstandsfläche des Anschlagskörpers in dem Teilbereich des Überdeckungsbereichs, in welchem sich die Abstützfläche des Einstellglieds und die Aufstandsfläche des Anschlagskörpers berühren, eine Erhebung und/oder, insbesondere konvexe, Flächenwölbung aufweist. Vorzugsweise ist die Aufstandsfläche ballig. Alternativ oder zusätzlich kann die Abstützfläche des Einstellglieds im Überdeckungsbereich nicht-plan sein und/oder die Abstützfläche des Einstellglieds kann im Teilbereich des Überdeckungsbereichs, in welchem sich die Abstützfläche des Einstellglieds und die Aufstandsfläche des Anschlagskörpers berühren, eine Erhebung oder Flächenwölbung aufweisen.

In einer anderen bevorzugten Ausführungsform des erfindungsgemäßen Drehpflugs weist die Aufstandsfläche des Anschlagskörpers im Überdeckungsbereich mehrere Teilflächen mit voneinander abweichenden Flächenneigungen auf. Durch die mehreren Teilflächen mit voneinander abweichenden Flächenneigungen wird eine Verkippung des Anschlagskörpers relativ zum Einstellglied ermöglicht, ohne dabei den Teilbereich des Überdeckungsbereichs, in welchem sich die Abstützfläche des Einstellglieds und die Aufstandsfläche des Anschlagskörpers berühren, wesentlich zu vergrößern.

Es ist darüber hinaus ein erfindungsgemäßer Drehpflug vorteilhaft, bei welchem der Anschlagskörper relativ zum Einstellglied verkippbar ist. Die Verkippung wird dadurch ermöglicht, dass sich die Abstützfläche des Einstellglieds und die Aufstandsfläche des Anschlagskörpers nicht entlang des gesamten, vorzugsweise ringförmigen, Überdeckungsbereichs berühren. Somit befinden sich jenseits des Teilbereichs des Überdeckungsbereichs, in welchem sich die Abstützfläche des Einstellglieds und die Aufstandsfläche des Anschlagskörpers berühren, Freiräume, in welche der Anschlagskörper hineinkippen kann.

In einer weiteren bevorzugten Ausführungsform weist der erfindungsgemäße Drehpflug einen Führungskörper auf, in welchem der Anschlagskörper bei einer durch das Einstellglied verursachten Bewegung geführt wird. Der Anschlagskörper ist vorzugsweise dazu eingerichtet, sich bei einer Verkippung relativ zu dem Einstellglied an dem Führungskörper abzustützen. Eine Verkippung des Anschlagskörpers führt also nicht zu einer querkraftbedingten Biegebelastung des Einstellglieds. Die Querkräfte werden durch die Abstützung des Anschlagskörpers an dem Führungskörper vielmehr in den Führungskörper eingeleitet, welcher im Vergleich zum Einstellglied eine wesentlich höhere Belastbarkeit aufweist.

Es ist darüber hinaus ein erfindungsgemäßer Drehpflug bevorzugt, bei welchem das Einstellglied einen länglichen Schaft aufweist, wobei der Schaft den Anschlagskörper nicht berührt, wenn sich der Anschlagskörper nach einer Verkippung relativ zum Einstellglied an dem Führungskörper abstützt. Auch im verkippten Zustand des Führungskörpers befindet sich also ein umlaufender Spalt zwischen dem länglichen Schaft des Einstellglieds und der Wandung der Aufnahmeausnehmung des Führungskörpers, sodass eine gegenseitige Berührung vermieden wird.

Das Einstellglied weist vorzugsweise, zumindest bereichsweise, einen Schaft mit einem Schaftdurchmesser in einem Bereich zwischen 20 mm und 35 mm auf. Die Aufnahmeausnehmung weist vorzugsweise, zumindest bereichsweise, einen runden Querschnitt mit einem Ausnehmungsdurchmesser in einem Bereich zwischen 30 mm und 45 mm auf. Die Aufnahmeausnehmung des Anschlagskörpers ist im Vergleich zu dem Durchmesser des Schafts des Einstellglieds so groß, dass sich Anschlagskörper und Schaft nicht berühren, sondern der Anschlagskörper über eine beispielsweise linienförmige Berührung der Abstützfläche des Einstellglieds so verkippt wird, dass sich der Anschlagskörper bei Verkippung am Führungskörper abstützt, bevor die Wandung der Aufnahmeausnehmung des Anschlagskörpers den Schaft des Einstellglieds berührt. So wird verhindert, dass eine Querkraft in den Schaft des Einstellglieds eingeleitet wird.

Das Einstellglied kann beispielsweise eine Schraube mit einem M27-Gewinde oder einem M30-Gewinde oder einem M33-Gewinde sein. Die Aufnahmeausnehmung ist in Bezug auf den Schaftdurchmesser des Einstellglieds überdimensioniert. Eine überdimensionierte Aufnahmeausnehmung verhindert, dass sich der Schaft des Einstellglieds an dem Anschlagskörper abstützen kann.

Das Einstellglied kann als Einstellschraube oder Einstellspindel ausgebildet sein. Die Abstützfläche des Einstellglieds kann sich an dem Schraubenkopf der Einstellschraube oder an einer Spindelmutter der Einstellspindel befinden.

Zwischen der Wandung der Aufnahmeausnehmung und dem sich durch die Aufnahmeausnehmung erstreckenden Einstellglied kann sich ein Spalt befinden, wobei der Spalt eine Spaltbreite von zumindest 5 mm, vorzugsweise zumindest 10 mm aufweisen kann. Der Spalt zwischen der Wandung der Aufnahmeausnehmung und dem sich durch die Aufnahmeausnehmung erstreckenden Einstellglied ist vorzugsweise ein Ringspalt. Zwischen dem Anschlagskörper und dem Führungskörper kann sich, insbesondere im unbelasteten Zustand, ein Spalt befinden, wobei der Spalt eine Spaltbreite von zumindest 5 mm, vorzugsweise zumindest 10 mm, aufweisen kann. Der Spalt zwischen dem Anschlagskörper und dem Führungskörper ist vorzugsweise ein Ringspalt. Vorzugsweise stützt sich der Anschlagkörper im belasteten Zustand an dem Führungskörper ab.

In einer weiteren bevorzugten Ausführungsform des erfindungsgemäßen Drehpflugs weist der Schaft des Einstellglieds ein Einstellgewinde auf, entlang welchem eine Einstellmutter des Einstellglieds bewegbar ist, wobei sich die Einstellmutter auf der Oberseite des Führungskörpers abstützt.

In einer äquivalent zur erfindungsgemäßen Ausführung anzusehenden Ausführungsform sind der Schaft des Einstellglieds und der Anschlagskörper integrale Bestandteile eines einstückigen Körpers und/oder bilden eine feste Einheit. Die beschriebene Ausformung von Abstützfläche und Aufstandsfläche beziehungsweise deren Berührung ist in diesem Fall zwischen der Einstellmutter des Einstellglieds und der Oberseite des Führungskörpers ausgebildet. Ebenso denkbar wäre es auf der Aufstandsfläche des Einstellgliedes eine keilartige Scheibe aufzulegen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Maschinenverbund mit einem erfindungsgemäßen Drehpflug in einer Rückansicht;
- Fig. 2: die Wendekonsole eines erfindungsgemäßen Drehpflugs in einer perspektivischen Darstellung;
- Fig. 3: einen verstellbaren Konsolenanschlag eines erfindungsgemäßen Drehpflugs in einer perspektivischen Darstellung;
- Fig. 4: einen verstellbaren Konsolenanschlag eines erfindungsgemäßen Drehpflugs in einer Schnittdarstellung;
- Fig. 5: einen Anschlagskörper eines erfindungsgemäßen Drehpflugs in einer perspektivischen Darstellung; und
- Fig. 6: den Kontaktbereich zwischen einer Abstützfläche und einer Aufstandsfläche in einer Detaildarstellung.

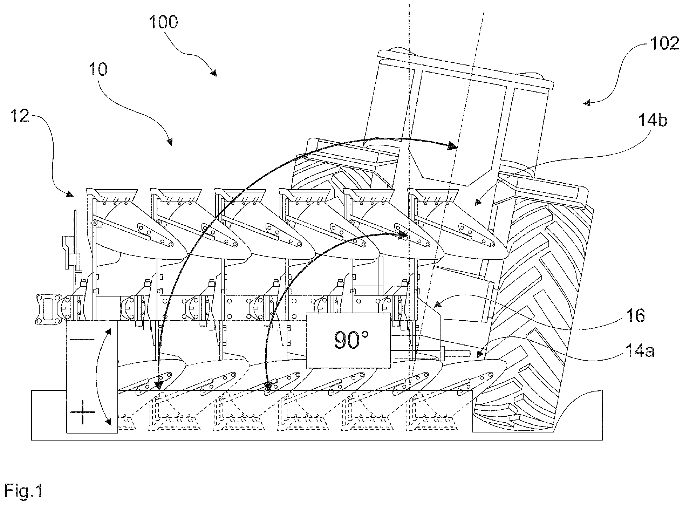

Die Fig. 1 zeigt einen Maschinenverbund 100 aus einem Schlepper 102 und einem von dem Schlepper 102 gezogenen Drehpflug 10 während der Bearbeitung einer landwirtschaftlichen Nutzfläche.

Der Drehpflug 10 umfasst eine drehbare Scharanordnung 12 mit mehreren Pflugscharen. An dem Drehpflug 10 kann der Neigungswinkel der Scharanordnung 12 zum Schlepper 102 und somit zum Boden der zu bearbeitenden Fläche eingestellt werden. In dem dargestellten Fall soll die Scharanordnung 12 im rechten Winkel zum unbearbeiteten Boden geführt werden. Damit die Scharanordnung 12 im rechten Winkel zum unbearbeiteten Boden geführt wird, ist die Einstellung des Neigungswinkels der Scharanordnung 12 erforderlich. Hierzu weist der Drehpflug 10 eine Wendekonsole 16 auf, über welche die Scharanordnung 12 verschwenkt und gedreht werden kann.

Die Scharanordnung 12 kann durch eine Drehung um eine sich in Fahrtrichtung erstreckende Drehachse in eine erste Arbeitsstellung und in eine zweite Arbeitsstellung gedreht werden. In der ersten Arbeitsstellung befindet sich die Wendekonsole 16 in Anschlag mit einem ersten Anschlagskörper 18a und in der zweiten Arbeitsstellung befindet sich die Wendekonsole 16 in Anschlag mit einem zweiten Anschlagskörper 18b. In der ersten Arbeitsstellung ist eine erste Gruppe 14a von Pflugscharen mit dem Boden in Eingriff bringbar. In der zweiten Arbeitsstellung ist eine zweite Gruppe 14b von Pflugscharen mit dem Boden in Eingriff bringbar.

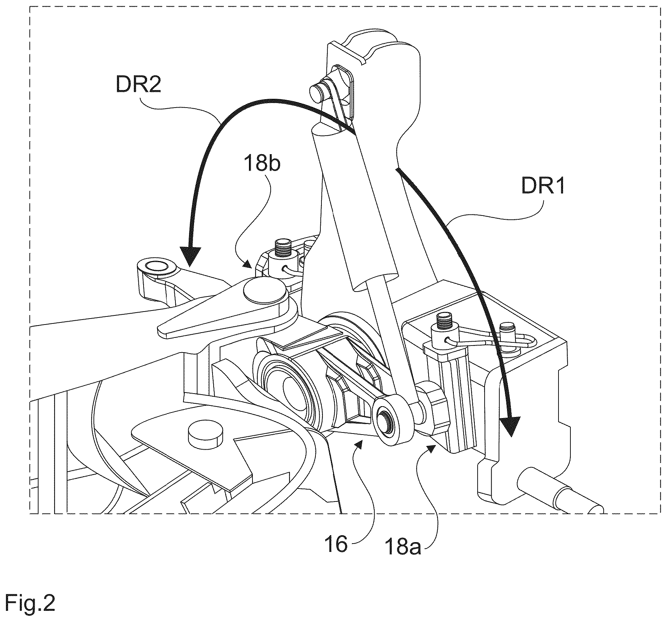

Die Fig. 2 zeigt eine Wendekonsole 16 eines Drehpflugs 10. Der erste Anschlagskörper 18a für die Wendekonsole 16 befindet sich in Fahrtrichtung auf der rechten Seite. Der zweite Anschlagskörper 18b für die Wendekonsole 16 befindet sich in Fahrtrichtung auf der linken Seite. Der Anschlagskörper 18a weist einen Konsolenanschlag 20a für die Wendekonsole 16 auf, wobei der Konsolenanschlag 20a die Drehung der Scharanordnung 12 in die Drehrichtung DR1 begrenzt. Der Anschlagskörper 18b weist einen Konsolenanschlag für die Wendekonsole 16 auf, wobei der Konsolenanschlag die Drehung der Scharanordnung 12 in die Drehrichtung DR2 begrenzt.

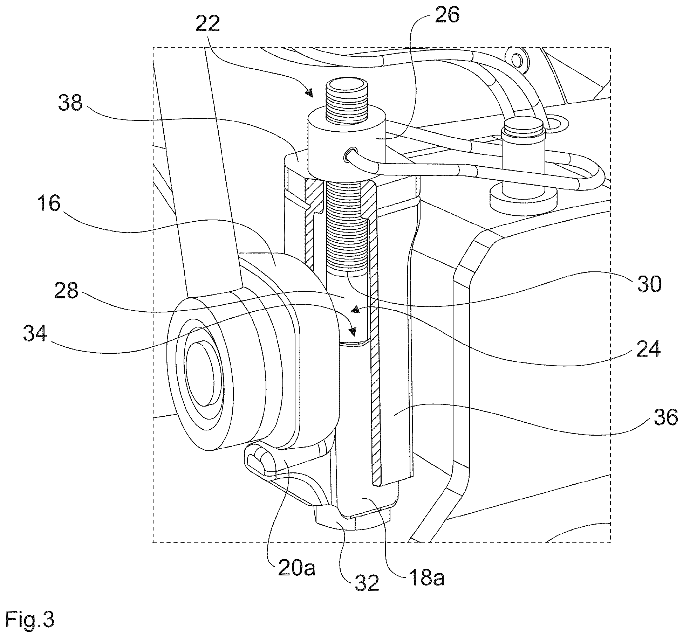

Die Fig. 3 zeigt, dass die Position des Anschlagskörpers 18a über ein Einstellglied 22 veränderbar ist. Über das Einstellglied 22 kann somit die Position des Konsolenanschlags 20a für die Wendekonsole 16 eingestellt werden.

Das Einstellglied 22 umfasst eine Einstellschraube 24 und eine Einstellmutter 26. Die Einstellschraube 24 umfasst einen Schaft 28, wobei sich im oberen Bereich des Schaftes 28 ein Einstellgewinde 30 befindet. Die Einstellschraube 24 ist derart ausgerichtet, dass sich der Schraubenkopf 32 unterhalb des Anschlagskörpers 18a befindet. Der Schaft 28 der Einstellschraube 24 erstreckt sich durch eine Aufnahmeausnehmung 34 des Anschlagskörpers 18a. Der Anschlagskörper 18a wird in einem Führungskörper 36 bei einer durch das Einstellglied 22 verursachten Bewegung geführt.

Die Einstellmutter 26 ist entlang des Einstellgewindes 30 bewegbar. Die Einstellmutter 26 stützt sich auf der Oberseite 38 des Führungskörpers 36 ab. Durch Drehen der Einstellmutter 26 kann der Schraubenkopf 32 angehoben und abgesenkt werden. Da sich der Anschlagskörper 18a auf dem Schraubenkopf 32 abstützt, wird hierdurch auch der Anschlagskörper 18a und der sich an dem Anschlagskörper 18a befindende Konsolenanschlag 20a angehoben und abgesenkt, wodurch der Neigungswinkel der Scharanordnung 12 einstellbar ist.

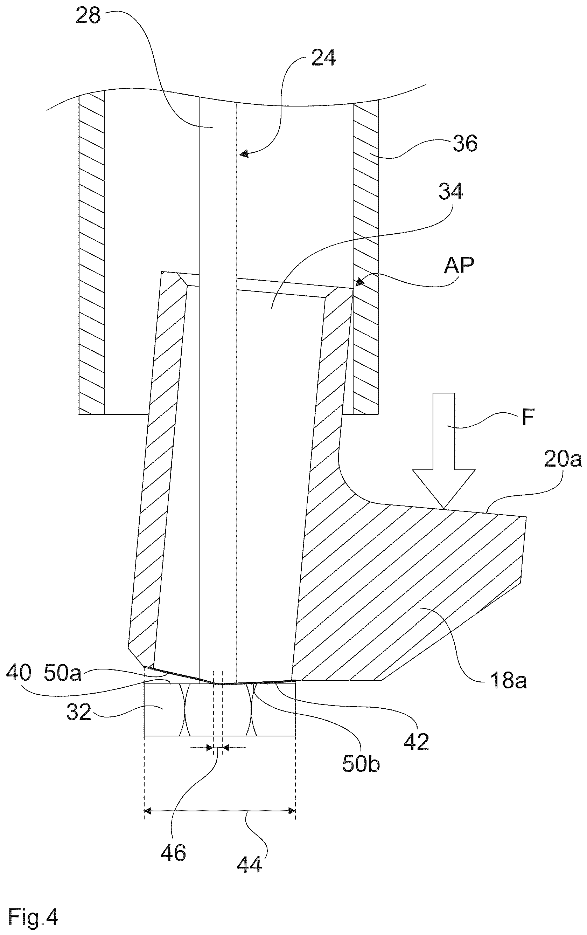

Die Fig. 4 zeigt, dass der Schraubenkopf 32 des Einstellglieds 22 eine in Richtung des Anschlagskörpers 18a weisende Abstützfläche 40 aufweist. Der Anschlagskörper 18a weist eine in Richtung der Abstützfläche 40 weisende Aufstandsfläche 42 auf. Die Abstützfläche 40 des Schraubenkopfes 32 und die Aufstandsfläche 42 des Anschlagskörpers 18a befinden sich in einem Überdeckungsbereich 44 in Deckung. Die Aufstandsfläche 42 des Anschlagskörpers 18a ist im Überdeckungsbereich 44 nicht-plan ausgebildet und weist im Überdeckungsbereich 44 zwei Teilflächen 50a, 50b mit voneinander abweichenden Flächenneigungen auf. Aufgrund der Neigung der Teilflächen 50a, 50b berühren sich die Abstützfläche 40 des Schraubenkopfes 32 und die Aufstandsfläche 42 des Anschlagskörpers 18a nur in einem Teilbereich 46 des Überdeckungsbereichs 44. Der Teilbereich 46 des Überdeckungsbereichs 44, in welchem sich die Abstützfläche 40 und die Aufstandsfläche 42 berühren, liegt zwischen den Teilflächen 50a, 50b.

Durch die Gestaltung der Aufstandsfläche 42 ist der Anschlagskörper 18a relativ zu der Einstellschraube 24 verkippbar.

Wenn die Wendekonsole 16 eine Kraft F auf den Konsolenanschlag 20a ausübt, kommt es zu einer Verkippung des Anschlagskörpers 18a relativ zur Einstellschraube 24. Der Anschlagskörper 18a stützt sich bei einer Verkippung relativ zu der Einstellschraube 24 am Abstützpunkt AP an dem Führungskörper 36 ab. In einer nicht dargestellten Ausführungsform stützt sich der Anschlagkörper 18a bei einer Verkippung relativ zu der Einstellschraube 24 zusätzlich an seinem unteren Ende an dem Führungskörper 36 ab, nämlich indem der Führungskörper 36 auf der linken Seite nach unten verlängert wird. Der Schaft 28 berührt den Anschlagskörper 18a nicht, wenn sich der Anschlagskörper 18a nach einer Verkippung relativ zum Einstellglied 22 an dem Führungskörper 36 abstützt. Somit wird eine Querkrafteinleitung in die Einstellschraube 24 durch einen etwaigen Kontakt mit der Wandung auf Aufnahmeausnehmung 34 vermieden, sodass die Einstellschraube 24 nicht oder nur in einem geringen Maße auf Biegung beansprucht wird.

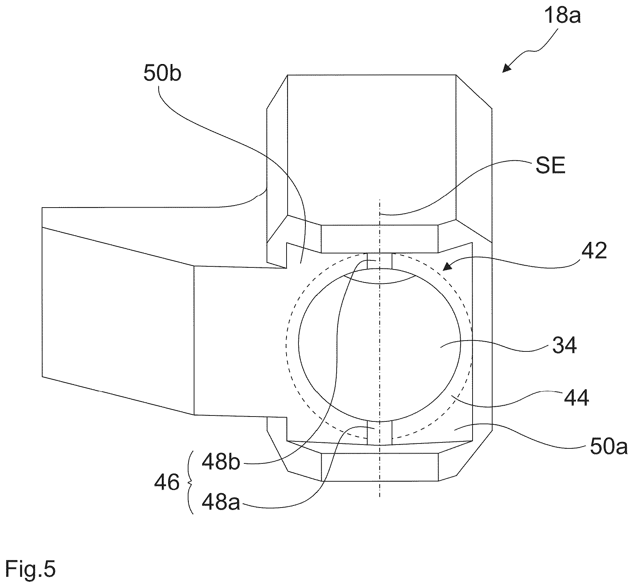

Die Fig. 5 zeigt, dass der Teilbereich 46 des Überdeckungsbereichs 44, in welchem sich die Abstützfläche 40 des Einstellglieds 22 und die Aufstandsfläche 42 des Anschlagskörpers 18a berühren, eine Symmetrieebene SE des Einstellglieds 22 schneidet. Der Teilbereich 46 des Überdeckungsbereichs 44, in welchem sich die Abstützfläche 40 und die Aufstandsfläche 42 berühren, umfasst zwei voneinander beabstandete Berührungszonen 48a, 48b und beträgt weniger als 10 % der Fläche des Überdeckungsbereichs 44. Die zwei voneinander beabstandeten Berührungszonen 48a, 48b befinden sich auf gegenüberliegenden Seiten der Aufnahmeausnehmung 34. Die Berührungszonen 48a, 48b befinden sich ferner auf einer Berührungslinie, wobei die Berührungslinie der Symmetrielinie des Einstellglieds 22 entspricht.

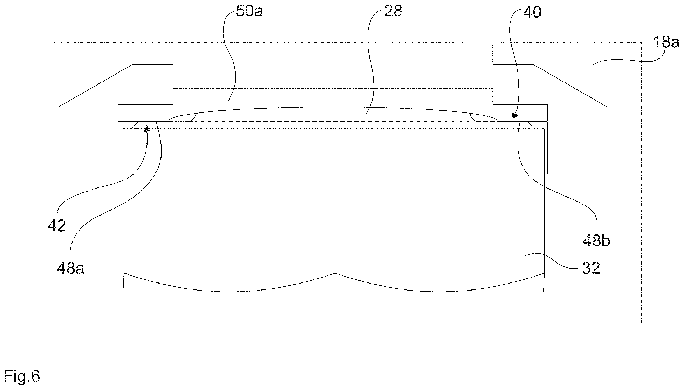

Die Fig. 6 zeigt die voneinander beabstandeten Berührungszonen 48a, 48b zwischen der Abstützfläche 40 und der Aufstandsfläche 42. Durch die Berührungszonen 48a, 48b ist der Teilbereich 46 des Überdeckungsbereichs 44, in welchem sich die Abstützfläche 40 und die Aufstandsfläche 42 berühren, nicht umlaufend ausgebildet.

### Bezugszeichen

- 10: Drehpflug
- 12: Scharanordnung
- 14a, 14b: Gruppen von Pflugscharen
- 16: Wendekonsole
- 18a, 18b: Anschlagskörper
- 20a: Konsolenanschlag
- 22: Einstellglied
- 24: Einstellschraube
- 26: Einstellmutter
- 28: Schaft
- 30: Einstellgewinde
- 32: Schraubenkopf
- 34: Aufnahmeausnehmung
- 36: Führungskörper
- 38: Oberseite
- 40: Abstützfläche
- 42: Aufstandsfläche
- 44: Überdeckungsbereich
- 46: Teilbereich
- 48a, 48b: Berührungszonen
- 50a, 50b: Teilflächen

- 100: Maschinenverbund
- 102: Schlepper

- AP: Abstützpunkt
- DR1, DR2: Drehrichtungen
- F: Kraft
- SE: Symmetrieebene

## Patentansprüche

1. Drehpflug (10) zum Bearbeiten des Bodens einer landwirtschaftlichen Nutzfläche, mit
- einer drehbaren Scharanordnung (12) mit mehreren Pflugscharen,
- einer mit der Scharanordnung (12) verbundenen Wendekonsole (16) zum Drehen der Scharanordnung (12); und
- zumindest einem Anschlagskörper (18a, 18b), welcher einen Konsolenanschlag (20a) für die Wendekonsole (16) aufweist, wobei der Konsolenanschlag (20a) die Drehung der Scharanordnung (12) in zumindest einer Drehrichtung (DR1, DR2) begrenzt, wobei die Position des Anschlagskörpers (18a, 18b) über ein sich durch eine Aufnahmeausnehmung (34) des Anschlagskörpers (18a, 18b) erstreckendes Einstellglied (22) veränderbar ist und wobei das Einstellglied (22) eine in Richtung des Anschlagskörpers (18a, 18b) weisende Abstützfläche (40) aufweist und der Anschlagskörper (18a, 18b) eine in Richtung der Abstützfläche (40) des Einstellglieds (22) weisende Aufstandsfläche (42) aufweist, wobei sich die Abstützfläche (40) des Einstellglieds (22) und die Aufstandsfläche (42) des Anschlagskörpers (18a, 18b) in einem Überdeckungsbereich (44) in Deckung befinden;
**dadurch gekennzeichnet, dass** sich die Abstützfläche (40) des Einstellglieds (22) und die Aufstandsfläche (42) des Anschlagskörpers (18a, 18b) nur in einem Teilbereich (46) des Überdeckungsbereichs (44) berühren.

2. Drehpflug (10) nach Anspruch 1,
**dadurch gekennzeichnet, dass** der Teilbereich (46) des Überdeckungsbereichs (44), in welchem sich die Abstützfläche (40) des Einstellglieds (22) und die Aufstandsfläche (42) des Anschlagskörpers (18a, 18b) berühren, eine Symmetrieebene (SE) des Einstellglieds (22) schneidet.

3. Drehpflug (10) nach Anspruch 1 oder 2,
**dadurch gekennzeichnet, dass** der Teilbereich (46) des Überdeckungsbereichs (44), in welchem sich die Abstützfläche (40) des Einstellglieds (22) und die Aufstandsfläche (42) des Anschlagskörpers (18a, 18b) berühren, nicht-umlaufend ausgebildet ist und/oder eine Linienform oder eine Punktform aufweist.

4. Drehpflug (10) nach einem der vorstehenden Ansprüche,
**dadurch gekennzeichnet, dass** der Teilbereich (46) des Überdeckungsbereichs (44), in welchem sich die Abstützfläche (40) des Einstellglieds (22) und die Aufstandsfläche (42) des Anschlagskörpers (18a, 18b) berühren, zwei voneinander beabstandete Berührungszonen (48a, 48b) umfasst.

5. Drehpflug (10) nach einem der vorstehenden Ansprüche,
**dadurch gekennzeichnet, dass** die Aufstandsfläche (42) des Anschlagskörpers (18a, 18b) im Überdeckungsbereich (44) nicht-plan ist und/oder die Aufstandsfläche (42) des Anschlagskörpers (18a, 18b) im dem Teilbereich (46) des Überdeckungsbereichs (44), in welchem sich die Abstützfläche (40) des Einstellglieds (22) und die Aufstandsfläche (42) des Anschlagskörpers (18a, 18b) berühren, eine Erhebung und/oder Flächenwölbung aufweist.

6. Drehpflug (10) nach einem der vorstehenden Ansprüche,
**dadurch gekennzeichnet, dass** die Aufstandsfläche (42) des Anschlagskörpers (18a, 18b) im Überdeckungsbereich (44) mehrere Teilflächen (50a, 50b) mit voneinander abweichenden Flächenneigungen aufweist.

7. Drehpflug (10) nach einem der vorstehenden Ansprüche,
**dadurch gekennzeichnet, dass** der Anschlagskörper (18a, 18b) relativ zu dem Einstellglied (22) verkippbar ist.

8. Drehpflug (10) nach einem der vorstehenden Ansprüche,
**gekennzeichnet durch** einen Führungskörper (36), in welchem der Anschlagskörper (18a, 18b) bei einer durch das Einstellglied (22) verursachten Bewegung geführt wird, wobei der Anschlagskörper (18a, 18b) vorzugsweise dazu eingerichtet ist, sich bei der einer Verkippung relativ zu dem Einstellglied (22) an dem Führungskörper (36) abzustützen.

9. Drehpflug (10) nach Anspruch 8,
**dadurch gekennzeichnet, dass** das Einstellglied (22) einen länglichen Schaft (28) aufweist, wobei der Schaft (28) den Anschlagskörper (18a, 18b) nicht berührt, wenn sich der Anschlagskörper (18a, 18b) nach einer Verkippung relativ zum Einstellglied (22) an dem Führungskörper (36) abstützt.

10. Drehpflug (10) nach Anspruch 9,
**dadurch gekennzeichnet, dass** der Schaft (28) des Einstellglieds ein Einstellgewinde (30) aufweist, entlang welchem eine Einstellmutter (26) des Einstellglieds bewegbar ist, wobei sich die Einstellmutter (26) auf der Oberseite (38) des Führungskörpers (36) abstützt.
